# EUROPÄISCHE PATENTANMELDUNG

(11) **EP 1 391 947 A1**
(43) Veröffentlichungstag der Anmeldung: **25.02.2004**
(21) Anmeldenummer: 03011286.6
(22) Anmeldetag: 17.05.2003
(51) Int. Cl.: H01M 2/02, H01M 10/40

(54) **Galvanisches Element mit einem dünnen, flexiblem Gehäuse**

(30) Priorität: 15.06.2002 DE 10226848
(71) Anmelder: VARTA Microbattery GmbH, 30419 Hannover (DE)
(72) Erfinder: Wöhrle, Thomas, Dr., 73479 Ellwangen (DE); Birke, Peter, Dr., 73479 Ellwangen (DE); Birke-Salam, Fatima, Dr., 73479 Ellwangen (DE); Rathmann, Claudia, 73479 Ellwangen (DE); Fürst, Stefan, 73492 Schwabsberg (DE); Stelzig, Heinrich, 73494 Rosenberg (DE); Ilic, Dejan, Dr., 73479 Ellwangen (DE)
(74) Vertreter: Patentanwälte Ruff, Wilhelm, Beier, Dauster & Partner

(57) **Zusammenfassung**

Ein galvanisches Element (1) weist mindestens eine Lithium-interkalierende Elektrode und ein dünnes, flexibles Gehäuse (3) aus zwei Metallfolien (5) auf, die direkt an der Elektrode anliegen und die miteinander über eine Klebe- oder Siegelschicht dicht verbunden sind. Mindestens eine der Metallfolien (5) ist auf der Außenseite mit einer die Stabilität und Festigkeit erhöhenden Kunststoffschicht (9) versehen. Zwischen Metallfolie (5) und Kunststoffschicht (9) ist eine Adhäsionsschicht (7) angeordnet. Die Metallfolie (5) besteht beispielsweise aus Kupfer. Die Kunststoffschicht (9) besteht beispielsweise aus Polyethylenterephthalat, Polyvinylidenchlorid oder Polvimid. Die Adhäsionsschicht (7) basiert beispielsweise auf Kautschuk, Acrylsäure, Polysiloxan oder Silikon.

## Beschreibung

Gegenstand der Erfindung ist ein galvanisches Element gemäß dem Oberbegriff von Anspruch 1, insbesondere mit mindestens einer Lithium-interkalierenden Elektrode und einem dünnen, flexiblen Gehäuse aus zwei Metallfolien, die direkt an den Elektroden anliegen und die miteinander über eine Klebe- oder Siegelschicht dicht verbunden sind.

Extrem dünne, flexible galvanische Elemente mit einer Gesamtdicke von weniger als 0,5 mm sind beispielsweise als Energiespeicher in "Active Smart Cards" erforderlich. Bei solchen dünnen elektronischen Chipkarten ist der flache Energiespeicher zur Stromversorgung des IC-Chips oder anderer Bauelemente wie integrierter Miniatursensoren oder Transponder vorgesehen.

Eine derartiges dünnes und flexibles galvanisches Element ist geeignet für den Einbau in "Active Smart Cards", da der Biegetest und die Prüfvorschrift erfüllt werden. Bei einem dynamischen Biegetest wird die Karte mit einer Frequenz von 30 Biegungen pro Minute (= 0,5 Hz) 2 cm in der Länge bzw. 1 cm in der Breite gewölbt. Eine Karte muss bei einem solchen Test mindestens 250 Biegungen in jede der vier möglichen Richtungen (insgesamt also 1000 Biegungen) ohne Schäden überstehen. Beim dynamischen Torsionstest wird die Karte ± 15° um die Längsachse mit einer Frequenz von 30 Biegungen pro Minute (=0,5 Hz) belastet. Der Standard verlangt 1000 Torsionen, ohne dass die Chipfunktionalität ausfällt oder mechanische Schäden an der Karte sichtbar werden.

Bei diesen Tests treten hohe mechanische Kräfte auf, insbesondere auf das metallische Außengehäuse des galvanischen Elements. Dabei kann ein reines Metallgehäuse des Elements einreißen und sich die Zelle öffnen. In diesem Falle ist das Gesamtsystem, also die Karte mit galvanischem Element bzw. Batterie, dann selbstverständlich unbrauchbar.

Das Dokument EP 997 959 B1 beschreibt ein galvanisches Element mit einem nichtwässrigen Elektrolyten, das ein Gehäuse aus Laminatfilmen besitzt. Derartige Laminate bestehen in der Regel aus einer doppelseitig beschichteten Aluminiumverbundfolie, die sich leicht bis zu 5 mm tiefziehen lässt und den Test aufgrund dieser Eigenschaft besteht. Die Kunststoffummantelung verhindert dabei ein Einreißen.

In der DE 101 02 125 ist die mechanische Verstärkung einer elektronischen Chip-Karte mit darin angeordnetem galvanischen Element mittels einer aus Metall oder faserverstärktem Kunststoff bestehenden Teil-/oder Ganzüberdeckung beschrieben.

Der Erfindung liegt die Aufgabe zugrunde, ein galvanisches Element anzugeben, welches bei Verwendung in einer aktiven Chipkarte die hohen Anforderungen an mechanische Stabilität gegenüber Biegebeanspruchungen und Torsionsbeanspruchungen erfüllt.

Diese Aufgabe wird bei einem galvanischen Element der eingangs genannten Art durch die Merkmale des Anspruchs 1 gelöst. In den Unteransprüchen sind vorteilhafte und bevorzugte Ausgestaltungen der Erfindung angegeben. Der Wortlaut der Ansprüche wird durch ausdrückliche Bezugnahme zum Inhalt der Beschreibung gemacht.

Bei galvanischen Elementen gemäß der EP 997 959 B1 ist man auf relativ dicke Laminate angewiesen, nämlich ca. 100 µm. Da auch die Innenseite eine isolierende Kunststoffschicht besitzt, reicht für die vorliegende Anwendung ein Verbund aus, bei dem die innenliegende Kunststofffolie weggelassen ist. So wird eine direkte Kontaktierung von negativer und positiver Elektrode gewährleistet.

Überraschenderweise zeigt sich, dass bereits eine einseitig auf die nach außen zeigende Seite einer Metallfolie aufgebrachte, dünne Kunststoffschicht oder Kunststofffolie einen ganz erheblichen verstärkenden Effekt gegen Torsion und Biegung ergibt. Ein solcher Folienverbund besteht erfindungsgemäß aus einer Metallfolie und einer Kunststoffschicht bzw. einem Kunststofffilm und gegebenenfalls einer Adhäsionsschicht. Beispiele für geeignete Kunststoffe sind Polyethlyenterephthalat, Polyethylennaphthalat, Polyvinylidenchlorid oder Polyimid.

Für die Adhäsionsschicht lassen sich drei Haupttypen unterscheiden. Auf Kautschuk basierende Adhäsionsschichten erlauben eine reversible Verklebung. Auf Acrylsäure basierende Klebeschichten können Adhäsionsschichten sein, die erst noch nachpolymerisiert oder gesiegelt werden müssen. Sie bewirken eine irreversible Verklebung. Auf Silikon oder Polysiloxan basierende Adhäsionsschichten sind meist Mischungen aus Silikon und Gummi. Ihre herausragenden Eigenschaften sind in der Regel gute Hochtemperaturstabilität, geringe Alterung und mehrfach mögliches Aufbringen, welches verbunden ist mit wiederholter rückstandsfreier Entfernung. Der letztgenannte Typ ist besonders gut geeignet für ein nachträgliches Aufbringen in Form von Abkleben. Auf Polysiloxan basierende und auf Polyvinylidenchlorid (PVC) aufgebrachte Adhäsionsschichten sind unter dem Handelsnamen "Tesa" der Firma Beiersdorf bekannt. Statt PVC und Pl kann auch das bereits erwähnte Polyethylenterephthalat zum Einsatz kommen. Typische Dicken der Adhäsionsschichten liegen bei ca. 12 µm - 15 µm, technisch werden sie zwischen 8 µm und 25 µm variieren.

Für die Metallfolie sind Edelstahl, Bimetall (Nickel/Edelstahl) oder Trimetall (Nickel/Edelstahl/Kupfer) typische Vertreter. Die äußere Nickelschicht ist beim Bi- bzw. Trimetall daher vorteilhaft für die elektrische Kontaktierung zum Verbraucher. Eine innere Kupferschicht kann sowohl für eine Kontaktierung zum Zellinneren als auch aus elektrochemischen Gründen vorteilhaft sein.

Kupfer als Metallfolie erfüllt in herausragender Eigenschaft eine Vielzahl von Anforderungen. Es ist leicht bis zu Dicken von 10 µm walzbar, es ist im Bereich der äußeren Ableiter um vieles leichter zu kontaktieren als Edelstahl und die Härte bzw. Weichheit lässt sich durch Walzen bzw. Glühen einstellen. Alle diese Prozesse sind kostengünstig durchführbar. Kupfer verfügt des weiteren über ein ausreichendes elektrochemisches Stabilitätsfenster für viele galvanische Elemente. Anstelle von Kupfer sind auch verschiedene Kupferlegierungen wie eine Kupfer-Magnesium-Legierung brauchbar.

Die Metallfolie kann eine Dicke von 8 µm bis 55 µm, vorzugsweise von 18 µm bis 35 µm aufweisen. Die Kunststoffschicht kann eine Dicke von 8 µm bis 40 µm, vorzugsweise 10µm bis 20 µm besitzen. Die Adhäsionsschicht kann eine Dicke von 1 µm bis 25 µm, vorzugsweise 5 µm bis 15 µm, aufweisen.

Die Elektrode kann Lithium-interkalierend sein, muss es aber nicht. Es ist vorteilhaft, mindestens eine der Metallfolien auf der zur Elektrode weisenden Innenseite mit einer Schicht elektrochemisch abgeschiedenen Metalls zu versehen zur Erhöhung der Haftung. Eine Metallfolie mit einer die Haftung verbessernden Schicht ist der EP 02027792 zu entnehmen, auf die hiermit ausdrücklich Bezug genommen wird.

Zur Herstellung des Gehäuses eines erfindungsgemäßen galvanischen Elements kann beispielsweise ein bereits fest kaschiertes oder geklebtes Verbundsystem aus einer Metallfolie, insbesondere aus einer Kupferfolie und einem Kunststofffilm, dienen. Aus diesem Materialverbund werden die für das galvanische Element notwendigen Halbteile, nämlich Zellendeckel und Zellenbecher, gefertigt. Außerhalb des Bereichs der Elektroden werden sie mit Siegelfolien laminiert, die zur dichten Verklebung von Zellendeckel und Zellenbecher notwendig sind.

Es ist auch möglich, das metallische Gehäuse des galvanischen Elements auf mindestens einer der beiden Außenseiten abzudecken, beispielsweise mit silikonisierten Klebebändern wie silikonisiertem Polyimidband oder Polyesterband. Derartige Klebebänder haften selbstklebend und dauerhaft auf Metallfolien.

Galvanische Elemente mit einem erfindungsgemäßen Folienverbund als Gehäuse besitzen eine erhöhte Stabilität und Festigkeit: Neben dem bereits erwähnten mechanischen Schutz bei den Biegetests erhält das galvanische Element eine hohe Durchstoßfestigkeit sowie einen zusätzlichen Wärmeschutz für das elektrochemisch aktive Zellinnere bei Heißlamination. Es erfolgt eine Isolation des Elementgehäuses bis auf den Bereich der kleinen freien Zone der Ableiter, wodurch die Gefahr eines unbeabsichtigten äußeren Kurzschlusses erheblich gemindert wird. Der Bereich um die Ableiter wird zusätzlich stabilisiert. Mögliche Mikrolöcher oder Risse in der Metallfolie werden abgedeckt und die Zelle wird vor schädigender Wasser-, Sauerstoff oder Kohlendioxiddiffusion wirkungsvoll geschützt.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird.

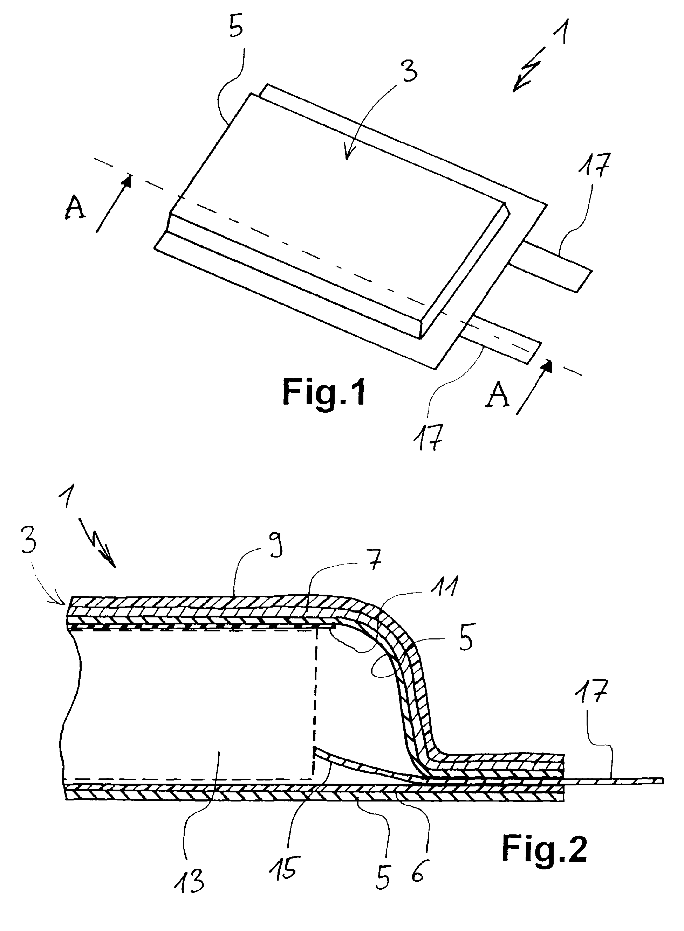

Im Folgenden ist der Gegenstand der Erfindung anhand der schematischen Figuren 1 und 2 näher erläutert.
Figur 1 zeigt eine Flachzelle der eingangs genannten Art und
Figur 2 zeigt einen vergrößerten Teilquerschnitt der Flachzelle gemäß Figur 1 längs der Linie AA.

Die Flachzelle 1 enthält eine oder mehrere Einzelzellen in einem dünnen, flexiblen Gehäuse 3 aus Metallfolien 5. Die Metallfolien 5 sind auf der zur Außenseite der Zelle 1 mit einer Kunststoffschicht 9 zur Erhöhung der Stabilität versehen. Der Kunststoffschicht 9 ist in Form eines Kapton-Bandes ausgeführt. Es ist mittels einer Klebeschicht 7 auf die Oberseite des Gehäuses 3 aufgebracht. Auf der ins Innere der Flachzelle 1 weisenden Seite ist die obere Metallfolie 5 mit einer Metallschicht 11 versehen. Die untere Metallfolie 5 weist nach innen eine Isolation 6 auf.

Im Inneren der Zelle 1 befindet sich, schematisch durch die Strichlierung dargestellt, eine Einzelzelle 13. Deren Aufbau kann bestehen aus einer positiven Elektrode und einer negativen Elektrode. Die Einzelzelle 13 besitzt schematisch dargestellte Anschlüsse 15 an jeweils Ableitfahnen 17.

### Ein Beispiel zur Herstellung eines vorbeschriebenen Elements:

Eine pastöse Masse wird hergestellt, indem man 77 Gewichtsprozent Braunstein (elektrolytisches MnO₂) nimmt, der bei 360° C thermisch aktiviert ist, 6 Gewichtsprozent Graphit, 2 Gewichtsprozent Leitruß, 7 Gewichtsprozent Polyviniylidendifluorid-Hexafluoropropylen und 8 Gewichtsprozent Propylencarbonat in Aceton innig vermischt. Die so erhaltende Masse wird auf einen Polyolefinseparator (Polypropylen) aufgerakelt und das Trägerlösemittel verdampft. Das so erhaltene Band wird im Vakuum getrocknet (110 ° C für 48 Stunden) und mit einem organischen Lithiumelektrolyten der Zusammensetzung 0,96 M LiClO₄ in 87:13 Vol % Propylencarbonat zu Ethylmethylcarbonat getränkt. Die Separator/Elektrode Verbundstückchen werden in der Größe 1,6 x 2,3 cm² ausgestanzt und in ein Kupferfoliengehäuse eingelegt.

Auf der Seite des Deckels wurde zuvor Lithium aufgepresst. Diese Becherseite ist gegebenenfalls zusätzlich zu einer elektrochemisch abgeschiedenen Kupferkristallit-Schicht mit einem auf Graphit basierten Leitfähigkeitsverbesserer versehen. Zwischen Becher und Deckel wird in den Bereichen, in denen Kupfer auf Kupfer trifft, jeweils eine Isolationsschicht (Siegelschicht) vorgesehen und es erfolgt eine Ultraschallverschweißung.

In einer ersten Ausführung ist die verwendete Kupferfolie bereits mit einem Band aus Kapton vor der Verarbeitung zu Gehäuseteilen versehen. In einer zweiten Ausgestaltung wurden die fertigen Zellen nachträglich mit einem Kapton-Band (Polyimidträger) oder Tesaband abgeklebt. Dieses Klebeband wird in einem Abrollverfahren beidseitig auf das fertiggestellte Gehäuse aufgespeist.

Derartig hergestellte erfindungsgemäße galvanische Zellen sind geeignet für den Einbau in _{"}Active Smart Cards" und bestehen den Biegetest und die Prüfvorschrift.

## Patentansprüche

1. Galvanisches Element (1) mit einem dünnen, flexiblen Gehäuse (3) und mit mindestens einer, insbesondere Lithium-interkalierenden, Elektrode (13), wobei das Gehäuse (3) aus zwei Metallfolien (5) besteht und wobei die Metallfolien miteinander dichtend verbunden sind und direkt an der wenigstens einen Elektrode (13) anliegen, **dadurch gekennzeichnet, dass** mindestens eine der Metallfolien (5) auf der Außenseite mit einer Kunststoffschicht (9) versehen ist zur Erhöhung der Stabilität und Festigkeit.

2. Galvanisches Element nach Anspruch 1, **dadurch gekennzeichnet, dass** die Metallfolien (5) miteinander über eine Klebeschicht oder Siegelschicht verbunden sind.

3. Galvanisches Element nach Anspruch 1 oder 2, **dadurch gekennzeichnet, dass** zwischen Metallfolie (5) und Kunststoffschicht (9) eine Adhäsionsschicht (7) angeordnet ist, wobei sie insbesondere eine Dicke von 1 µm bis 25 µm aufweist, vorzugsweise 5 µm bis 15 µm

4. Galvanisches Element nach einem der vorhergehenden Ansprüche, **dadurch gekennzeichnet, dass** die Metallfolie (5) Kupfer aufweist.

5. Galvanisches Element nach einem der Ansprüche 1 bis 3, **dadurch gekennzeichnet, dass** die Metallfolie (5) Edelstahl aufweist.

6. Galvanisches Element nach einem der vorhergehenden Ansprüche, **dadurch gekennzeichnet, dass** die Kunststoffschicht (9) ein Element aus der folgenden Gruppe aufweist: Polyethylenterephthalat, Polyethylennaphthalat, Polyvinylidenchlorid oder Polyimid.

7. Galvanisches Element nach Anspruch 3, **dadurch gekennzeichnet, dass** die Adhäsionsschicht (7) auf Kautschuk, Acrylsäure, Polysiloxan oder Silikon basiert.

8. Galvanisches Element nach einem der vorhergehenden Ansprüche, **dadurch gekennzeichnet, dass** mindestens eine der Metallfolien (5) auf der zur Elektrode (13) weisenden Innenseite mit einer Metallschicht (11) versehen ist.

9. Galvanisches Element nach einem der vorhergehenden Ansprüche, **dadurch gekennzeichnet, dass** die Metallfolie (5) eine Dicke von 8 µm bis 55 µm aufweist, vorzugsweise 18 µm bis 35 µm.

10. Galvanisches Element nach einem der vorhergehenden Ansprüche, **dadurch gekennzeichnet, dass** die Kunststoffschicht (9) eine Dicke von 8 µm bis 40 µm aufweist, vorzugsweise 10 µm bis 20 µm.
